# EUROPÄISCHE PATENTANMELDUNG

(11) **EP 4 283 827 A1**
(43) Veröffentlichungstag der Anmeldung: **29.11.2023**
(21) Anmeldenummer: 22175423.7
(22) Anmeldetag: 25.05.2022
(51) Int. Cl.: H02J 13/00, H02J 3/00

(54) **VERFAHREN ZUM BETREIBEN EINES NIEDERSPANNUNG- ODER MITTELSPANNUNGSTROMNETZES, COMPUTERPROGRAMM UND ELEKTRONISCH LESBARER DATENTRÄGER**

(71) Anmelder: Siemens Aktiengesellschaft, 80333 München (DE)
(72) Erfinder: Demydov, Nikolai, 90357 Feucht (DE); Duckheim, Mathias, 91052 Erlangen (DE); Metzger, Michael, 85570 Markt Schwaben (DE); Stursberg, Paul, 80538 München (DE); Wagner, Eva, 91056 Erlangen (DE)
(74) Vertreter: Siemens Patent Attorneys

(57) **Zusammenfassung**

Die Erfindung betrifft ein Verfahren zum Betreiben eines Stromnetzes, dessen Zustand ermittelt wird. Ferner betrifft die Erfindung ein Computerprogramm und einen elektronisch lesbaren Datenträger.

## Beschreibung

Die Erfindung betrifft ein Verfahren zum Betreiben eines Stromnetzes gemäß dem Patentanspruch 1. Ferner betrifft die Erfindung ein Computerprogramm gemäß dem Patentanspruch 12. Schließlich betrifft die Erfindung einen elektronisch lesbaren Datenträger gemäß dem Patentanspruch 13.

In Stromnetzen für Niederspannung, welche insbesondere Netzabschnitte der letzten Meile zu Endverbrauchern darstellen, werden zunehmend neue Anlagen, beispielsweise Photovoltaikanlagen, Speicher, beispielsweise elektrische Batterien, und/oder Verbraucher, beispielsweise Ladestationen für Elektrofahrzeuge, integriert. Aufgrund des dadurch veränderten Erzeuger- und Verbraucherszenarios werden solche Niederspannungsnetze dementsprechend anders und insbesondere zusätzlich belastet.

In Niederspannungsnetzen ist, insbesondere im Gegensatz zu Übertragungsnetzen, in der Regel kaum Messinfrastruktur installiert. Dadurch können einerseits nur ungenaue Schätzungen eines Zustands des Niederspannungsnetzes ermittelt werden, andererseits ist für ein Niederspannungsnetz zumeist nur relevant, ob eine Grenzwertverletzung nah beziehungsweise wahrscheinlich ist.

Hierzu sind nicht nur deterministische Werte für die Abschätzung des Zustands notwendig, sondern auch Angaben, wie verlässlich diese Schätzungen sind, wären hilfreich. Das heißt beispielsweise Angaben zur Unsicherheit der Schätzwerte.

Stand der Technik bei der Netzzustandsschätzung in Stromverteilnetzen ist die Methode der "Weighted Least Squares", die die Genauigkeiten der verfügbaren Messwerte über Gewichte in einer zu minimierenden quadratischen Zielfunktion berücksichtigt. Der geschätzte Netzzustand ist ein deterministischer Vektor der Zustandsvariablen. Vergleiche hierzu F. C. Schweppe und J. Wildes, "Power System Static-State Estimation, Parts I, II and III", in IEEE Transactions on Power Apparatus and Systems, Jan. 1970.

Ferner gibt es Methoden zur Zustandsschätzung, die neuronale Feedforward-Netze nutzen. Diese trainieren die Gewichte der künstlichen neuronalen Netze anhand von historischen oder simulierten Trainingsdaten, wobei die resultierenden Gewichte ebenfalls deterministische Werte sind.

Aufgabe der vorliegenden Erfindung ist es, ein Verfahren, ein Computerprogramm sowie einen Datenträger bereitzustellen, durch welche für den Betrieb eines Stromnetzes für Niederspannung und/oder Mittelspannung eine Zustandsschätzung durchgeführt werden kann, welche ein Zustandsmodell beschreibt, dessen Gewichte besonders vorteilhaft gebildet werden können.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in der Zeichnung angegeben.

Ein erster Aspekt der Erfindung betrifft ein Verfahren zum Betreiben eines Stromnetzes für Niederspannung und/oder Mittelspannung, welches Leitungen und mehrere an diesen angeschlossenen Anlagen aufweist. Bei dem erfindungsgemäßen Verfahren wird ein Zustand des Stromnetzes mit den folgenden Schritten ermittelt:
In einem ersten Schritt erfolgt ein Bereitstellen von GIS-Daten, welche eine geografische Standardinformation, somit eine Information des Standards, des Stromnetzes umfassen, wobei die GIS-Daten von einem Geoinformationssystem stammen beziehungsweise bereitgestellt werden.

In einem zweiten Schritt erfolgt ein Erzeugen eines Zweigmodells der Leitungen des Stromnetzes anhand der GIS-Daten, wobei eine Anfangswahrscheinlichkeit für Verbindungen der Leitungen untereinander festgelegt wird. Das Zweigmodell stellt somit eine Leitungstopologie des Stromnetzes dar.

In einem dritten Schritt erfolgt ein Bereitstellen von Anlagendaten, welche zumindest eine der mehreren Anlagen charakterisieren.

In einem vierten Schritt erfolgt ein Erzeugen eines Priormodells des Stromnetzes durch Kombination des Zweigmodells mit den Anlagendaten, wobei eine Anfangswahrscheinlichkeit für die wenigstens eine Anlage festgelegt wird.

In einem fünften Schritt erfolgt ein Generieren eines insbesondere zufälligen Eingabezustands, welcher einen möglichen Zustand des durch das Priormodell beschriebenen Stromnetzes beschreibt.

In einem sechsten Schritt erfolgt ein Durchführen einer Lastflusssimulation, durch welche wenigstens eine Zustandsvariable anhand des Eingabezustands berechnet wird.

In einem siebten Schritt erfolgt ein Bestimmen Erzeugen eines Zustandsmodells des Stromnetzes anhand der wenigstens einen Zustandsvariablen.

Das Stromnetz ist insbesondere ein Niederspannungsnetz und somit zur Verteilung elektrischer Energie an elektrische Endverbraucher ausgebildet. Ein Endverbraucher ist beispielsweise einen Haushalt mit Niederspannungsgeräten. Diese können einen Teil der Anlagen stellen. Aufgrund von Leitungsverlusten ist das Niederspannungsnetz in der räumlichen Ausdehnung in der Regel auf einen Bereich von einigen 100 Metern bis zu einigen wenigen Kilometern beschränkt. Das Niederspannungsnetz kann beispielsweise über eine Transformatorenstation aus einem übergeordneten Mittelspannungsnetz mit Energie versorgt werden. Zusätzlich oder alternativ kann das Stromnetz auch als das Mittelspannungsnetz ausgebildet sein.

Das Geoinformationssystem (kurz GIS) ist ein Informationssystem zum Erfassen räumlicher Daten, wobei diese analysiert und organisiert werden können. So können die GIS-Daten beispielsweise aus durch maschinelles Sehen analysierte Luftbilder gebildet werden. Solch ein Luftbild kann als Standardinformation beispielsweise die Position von Endverbrauchern, beispielsweise Häuser beziehungsweise Haushalte, und/oder die Position von Leitungsmasten von mit diesen verbundenen Leitungen umfassen. Die Leitungen des Stromnetzes sind als elektrische Leitungen ausgebildet. Bei den Anlagen kann es sich beispielsweise um Energieverbraucher beziehungsweise Energieerzeuger, wie Photovoltaikanlagen, handeln.

Mit anderen Worten wird bei dem Verfahren aus Daten des GIS-Systems ein "Skelett"-artiges Modell des elektronischen Netzes erstellt. Dieses Modell ist ein Zweigmodell der Leitungen, bei denen insbesondere Verbindungen von Endpunkten und geografisch naheliegenden Anfangspunkten mit Topologiezuständen mit bestimmten Wahrscheinlichkeiten modelliert werden. Die Wahrscheinlichkeiten beziehungsweise die Anfangswahrscheinlichkeit können ohne zusätzliches Vorwissen zum Beispiel gleich verteilt gewählt werden.

Für die angeschlossenen Anlagen wird aus charakteristischen Daten eine weitere Wahrscheinlichkeitsverteilung erstellt, die beispielsweise mögliche Last- und Einspeisezustände der Anlagen mit jeweiligen gewissen Unsicherheiten beschreibt. Beim Vorliegen von Messdaten können diese Wahrscheinlichkeitsverteilungen beziehungsweise die Anfangswahrscheinlichkeit auch aus diesen gewonnen werden.

Zusammengenommen ergibt sich nun quasi aus einer Parametrierung einer Priorverteilung, welche das Zweigmodell und die Anlagendaten darstellen, das Priormodell.

Für das Durchführen der Lastflusssimulation können nun entsprechend der prioren, parametrierten angenommenen Wahrscheinlichkeitsverteilungen, den Anfangswahrscheinlichkeit beziehungsweise Anfangsverteilungen, Stichproben, sogenannte Samples, gezogen beziehungsweise ermittelt werden. Diese Stichproben können den insbesondere zufällig generierten Eingabezustand charakterisieren und beispielsweise einen Satz von Topologiezuständen, Lasten und/oder Einspeisungen des Stromnetzes beschreiben.

Bei der Lastflusssimulation wird somit ein Zustand des Stromnetzes beziehungsweise die Zustandsvariable berechnet, welche beispielsweise eine Spannung, einen Strom und/oder einen Leistungsfluss des Stromnetzes beschreiben kann beziehungsweise können. Dabei kann aus den Daten der Lastflusssimulation nun ein Eingabezustand ermittelt werden, welches bei der Erzeugung des Zustandsmodells verwendet werden kann. Als Eingabe beziehungsweise Input kann eine Größe, die in dem Stromnetz beispielsweise in Echtzeit als Messung zur Verfügung gestellt wird, aus der Lastflusssimulation als die Zustandsvariable beziehungsweise ein simulierter Wert ermittelt werden. Das Ziel beziehungsweise Target ist eine relevante Zustandsgröße, beispielsweise ein Spannungsbetrag, ein Strom, der aus den simulierten Daten und somit aus dem Zustandsmodell zusammengefasst werden kann.

Das Zustandsmodell kann beispielsweise durch ein neuronales Netz, insbesondere durch ein bayesianisches neuronales Netz, erzeugt beziehungsweise gebildet werden, wobei somit die Lastflusssimulation beziehungsweise die Ergebnisse der Lastflusssimulation und somit die Zustandsvariable als Trainingsinput für das bayesianische neuronale Netz, kurz BNN, verwendet werden kann.

Dabei ergibt sich durch das Verfahren der Vorteil, dass auf die neuartigen Veränderungen in Stromnetzen, welche als Niederspannungsnetze ausgebildet sind, mit den neu hinzukommenden Anlagen, welche insbesondere Energieerzeuger beziehungsweise Energieverbraucher sind, Betriebsansätze realisiert werden können, um die Verbraucher in kritischen Netzsituationen gezielt zu steuern, um Überlastungen zu vermeiden. Dadurch können beispielsweise eine Verletzung des Spannungsbandes und/oder ein Auslösen von Sicherungen durch Überschreiten der Maximalleistung vermieden werden. Solch ein Betriebsansatz kann nur realisiert werden, wenn ein Zustand beziehungsweise die Zustände des Stromnetzes, beispielsweise wie nah eine zu vermeidende Spannungsbandüberschreitung und/oder eine Stromgrenze liegen, bekannt sind. Durch das erfindungsgemäße Verfahren wird hier vorteilhafterweise eine Möglichkeit zur Bestimmung solcher Zustände und somit zum Betreiben des Stromnetzes bereitgestellt. Dabei werden insbesondere Gewichte beziehungsweise Fehler des Zustandsmodells nicht nur deterministisch, sondern auch statistisch vorliegen. So ist ferner ein Vorteil, dass bei dem Zustandsmodell eine Berücksichtigung einer Unsicherheit und einer Unbestimmtheit über die Wahrscheinlichkeitsverteilung der Gewichte des neuronalen Netzes, insbesondere des BNN, erfolgen kann.

In vorteilhafter Ausgestaltung der Erfindung wird anhand des Zustandsmodells ein Steuereingriff an einer der mehreren Anlagen durchgeführt. Mit anderen Worten erfolgt durch das Verfahren eine Bestimmung zumindest eines insbesondere besonders vorteilhaften Steuereingriffs für eine der Anlagen des Stromnetzes. Insbesondere kann der Steuereingriff dergestalt durch das Zustandsmodell ermittelt werden, dass beispielsweise keine Randbedingung, welche beispielsweise das Stromnetz charakterisiert, verletzt wird. Durch das Verfahren ist somit auf besonders vorteilhafte Weise ein Betrieb des Stromnetzes ermöglicht, da wenigstens eine der Anlagen des Stromnetzes besonders vorteilhaft auf einen Zustand des Stromnetzes aufgrund des Steuereingriffs reagieren betrieben werden kann.

In weiterer vorteilhafter Ausgestaltung der Erfindung wird das Zustandsmodells durch maschinelles Lernen, beispielsweise mittels neuronalem Netz, insbesondere mittels bayesianischem neuronalen Netz, bestimmt beziehungsweise ermittelt, wobei die wenigstens eine durch die Lastflusssimulation gewonnene Zustandsvariabel als Trainingsdaten verwendet werden. Mit anderen Worten wird das Zustandsmodell durch Methoden des maschinellen Lernens beziehungsweise künstlicher Intelligenz ermittelt, wobei vorteilhafter Weise ein neuronales Netz verwendet wird beziehungsweise ein Algorithmus, welcher die Funktionen eines neuronalen Netzes abbilden kann. Dabei kann ein bayesianisches Netz beziehungsweise bayesches Netz Zufallsvarianten und bedingte Abhängigkeiten zwischen den Zufallsvariablen beschreiben, wobei die Verteilung beziehungsweise Wahrscheinlichkeitsverteilung häufig mit einer Normalverteilung besetzt oder zumindest initiiert wird. So kann bei dem Verfahren ein bayesianisches neuronales Netz initialisiert werden, welches zum Beginn zumindest offline ist und somit beispielsweise keine Echtzeitdaten erhält. Das bayesianisches neuronale Netz beziehungsweise BNN wird mit den Trainingsdaten, welche insbesondere durch die Lastflusssimulation gewonnen werden, trainiert. Dadurch ergibt sich der Vorteil, dass auf besonders vorteilhafte Weise zur Bestimmung des Zustands des Stromnetzes auf Methoden des maschinellen Lernens zurückgegriffen werden kann, wodurch beispielsweise eine komplizierte Annahme zur Erzeugung des initialen Modells beziehungsweise eine Priorverteilung besonders einfach gehalten werden kann.

In weiterer vorteilhafter Ausgestaltung der Erfindung wird eine Verfeinerung des Zustandsmodells durch Wiederholung des Lastflusssimulationen durchgeführt beziehungsweise erfolgt die Verfeinerung durch die Wiederholung, wobei die Lastflusssimulation wiederholt wird, bis ein festgelegtes Gütekriterium als Abbruchbedingung erfüllt wird. Mit anderen Worten ist eine Trainingsphase zum Trainieren des Zustandsmodells abgeschlossen, wenn die Trainingsdaten ein gewisses Gütekriterium erfüllen. Andernfalls können durch die Lastflusssimulation weitere Daten erzeugt werden, mit denen eine bessere Genauigkeit erreicht werden kann. Dadurch ergibt sich der Vorteil, dass die Bestimmung des Zustands besonders präzise durchgeführt werden kann.

In weiterer vorteilhafter Ausgestaltung der Erfindung werden die Anlagendaten von einem Smart-Meter und/oder einem Feldgerät und/oder einem aktiven Element insbesondere wenigstens einer der mehreren Anlagen erzeugt beziehungsweise bereitgestellt. Mit anderen Worten werden beim Bereitstellen der Anlagendaten Messungen und somit Messergebnisse beziehungsweise Messdaten von einem Smart-Meter und/oder einem Feldgerät, bei welchem es sich um einen Leistungsschalter aus einem Abgang von einem Mittelspannungstransformator und/oder um eine Ortsnetzstation handeln kann, abgerufen beziehungsweise verwendet. Je nach Art des in dem Feldgerät vorgehaltenen Messgeräts kann eine andere Messgröße erfasst werden. Zusätzlich oder alternativ werden die Daten von einem Aktivelement bereitgestellt, bei welchem es sich insbesondere um eine flexible Anlage beispielsweise in einem Haushalt handeln kann. Das Aktivelement kann insbesondere ein eindeutiges Identifikationsmerkmal aufweisen. Bei dem Aktivelement kann es sich beispielsweise um eine Ladestation und/oder eine Photovoltaikanlage handeln, welche beispielsweise jeweils bei ihrer Installation über eine Smartphoneapplikation bei einem Betreiber beziehungsweise dem Betreiber des Stromnetzes gemeldet werden kann. Als Messwert kann beispielsweise ein Leistungssollwert und/oder Geokoordinaten vorliegen. Dadurch ergibt sich der Vorteil, dass der Zustand des Stromnetzes besonders vorteilhaft bestimmt werden kann.

In weiterer vorteilhafter Ausgestaltung der Erfindung werden dem Zustandsmodell Echtzeitdaten und/oder echtzeitnahe Daten zugeführt und/oder umfassen die Anlagendaten Echtzeitdaten beziehungsweise echtzeitnahe Daten. Mit anderen Worten erhält das Zustandsmodell - insbesondere das BNN - in Echtzeit Daten von Messungen aus den im Stromnetz installierten Messgeräten, insbesondere der Anlagen. Mit diesen Messungen als Eingabe beziehungsweise Input wird die Ausgabe beziehungsweise der Output des Zustandsmodells, insbesondere des BMN, beispielsweise mehrfach instanziiert. Daraus können Erwartungswerte und Unsicherheiten bestimmt werden. Dadurch ergibt sich der Vorteil, dass das Verfahren besonders vorteilhaft durchgeführt werden kann.

In weiterer vorteilhafter Ausgestaltung der Erfindung wird das Zustandsmodell nachtrainiert, wobei Messungen als Eingabezustand und/oder Zustandsvariable verwendet werden. Mit anderen Worten können, beispielsweise falls für ein Zeitintervall rückblickend Daten für zuvor geschätzte Zustandsgrößen beziehungsweise für einen geschätzten Eingabezustand und/oder eine Zustandsvariabel erhältlich werden, diese als zusätzliche Ziele beziehungsweise Targets und/oder die erhaltenen Messungen als Input beziehungsweise Eingabe in eine neue Trainingsphase zusammengefasst werden. Von dem Smart-Meter können über ein Meter-Data-Management, kurz MDM, Daten regelmäßig an den Netzbetreiber übermittelt werden. So können beispielsweise jeden Tag Daten übermittelt werden und so für das Verfahren zumindest zur Nachkontrolle zur Verfügung stehen, welche Prognosen des Zustandsmodells verbessern können. Dadurch ergibt sich der Vorteil, dass das Zustandsmodell besonders vorteilhaft modelliert werden kann.

In weiterer vorteilhafter Ausgestaltung der Erfindung wird ein Zusammenhang zwischen Steuereingriff und Änderung des Zustands erfasst. Mit anderen Worten wird, insbesondere in Echtzeit, der durch das Verfahren vorausgesagte Zustand überwacht und/oder nachjustiert. Dabei kann eine Änderung des Zustands und somit eine Zustandsänderung detektiert beziehungsweise gemessen und/oder berechnet werden und das während oder nachdem ein Steuereingriff an einer der Anlagen stattgefunden hat. So ist ein Zusammenhang zwischen Steuereingriff und Zustandsänderung modellierbar, wodurch beispielsweise mittels einem bayesianischen Model anstelle des bayesianischen neuronalen Netzes statistische Parameter für diesen Zusammenhang durch Steuereingriffe identifizierbar sind. Dadurch könnte vorteilhaft das Zustandsmodell verbessert werden.

In weiterer vorteilhafter Ausgestaltung der Erfindung wird bei der Lastflusssimulation aus einer Eingangsgröße eine Zielgröße ermittelt, welche zusammen als Trainingspaar für das Zustandsmodell verwendet werden. Mit anderen Worten wird der Input und das Target bestimmt, wobei es sich bei der Ausgangsgröße beziehungsweise dem Input um eine Größe handeln kann, die in dem Stromnetz in Echtzeit als Messung zur Verfügung steht und für die die Lastflusssimulation die simulierten Werte zusammenfasst. Bei der Zielgröße beziehungsweise dem Target, können relevante Zustandsgrößen, zum Beispiel Spannungsbeträge, Ströme und so weiter aus den simulierten Daten zusammengefasst werden. Dadurch ergibt sich der Vorteil, dass auf besonders vorteilhafte Weise ein Trainingspaar für die Trainingsphase des Zustandsmodells vorgegeben werden kann.

In weiterer vorteilhafter Ausgestaltung der Erfindung ist der Eingabezustand und/oder die Zustandsvariabel und/oder der Zustand eine Spannung und/oder ein Strom und/oder ein Spannungsband und/oder eine Leistung beziehungsweise umfasst der Eingabezustand eine Spannung, einen Strom, ein Spannungsband und/oder eine Leistung. Zusätzlich oder alternativ umfasst die Zustandsvariabel die Spannung, den Strom, das Spannungsband und/oder die Leistung. Zusätzlich oder alternativ umfasst der Zustand die Spannung, den Strom, das Spannungsband und/oder die Leistung. Dadurch ergibt sich der Vorteil, dass durch das Verfahren, die zum Betreiben des Stromnetzes besonders relevanten Parameter durch das Verfahren ermittelt und/oder berechnet werden.

In weiterer vorteilhafter Ausgestaltung der Erfindung ist wenigstens eine der mehreren Anlagen als Verbraucheinrichtung und/oder Erzeugereinrichtung und/oder Abgang und/oder Ortsnetzstation und/oder Leistungsschalter ausgebildet. Mit anderen Worten handelt es sich bei der Anlage um eine Verbrauchereinrichtung und somit beispielsweise um einen Haushalt, welcher elektrische Verbraucher aufweist, beispielsweise eine Ladestation für ein elektrisches Fahrzeug. Zusätzlich oder alternativ handelt es sich bei der Anlage um eine Erzeugereinrichtung, beispielsweise eine Photovoltaikanlage, ein Windrad und/oder einen Generator, welcher durch Wasserkraft angetrieben wird. Zusätzlich oder alternativ kann die Anlage als Feldgerät ausgebildet sein und somit kann es beispielsweise um einen Abgang aus einem Mittelspannungsnetz, beispielsweise einen Leistungsschalter an einem Mittelspannungstransformator, handeln. Beispielsweise kann die Anlage somit als Transformatorenstation ausgebildet sein, welche als Umspannstation fungiert und einen Trafo zum Reduzieren der elektrischen Spannung verwendet. Dadurch ergibt sich der Vorteil, dass das Stromnetz beziehungsweise das Modell für das Stromnetz besonders viele tatsächlich im Stromnetz vorkommende Anlagen einbinden kann.

In weiterer vorteilhafter Ausgestaltung der Erfindung erfolgt eine Erstellung einer Stichprobe und/oder eine modellierte, a posteriori Wahrscheinlichkeitsverteilung des Zustandes wird erzeugt. Mit anderen Worten kann beispielsweise als Ausgabe die Erstellung einer Stichprobe erfolgen. Zusätzlich oder alternativ ist eine Realisierung der modellierten, a posteriori Wahrscheinlichkeitsverteilung des Zustandes möglich. Durch die Stichprobe kann beispielsweise vorteilhaft eine Überprüfung des aktuellen Zustandsmodells erfolgen. Ein Vorteil der Wahrscheinlichkeitsverteilung ist das Informationen aus dem Modell berücksichtigt werden können.

Ein zweiter Aspekt der Erfindung umfasst ein Computerprogramm. Das Computerprogramm kann beispielsweise in einem Speicher der elektronischen Recheneinrichtung einer Presse geladen werden und umfasst Programmmittel, um die Schritte des Verfahrens auszuführen, wenn das Computerprogramm in der elektronischen Recheneinrichtung beziehungsweise einer Steuerungseinrichtung ausgeführt wird.

Dabei sind Vorteile und vorteilhafte Ausgestaltungen des ersten Aspekts der Erfindung als Vorteile und vorteilhafte Ausgestaltungen des zweiten Aspekts der Erfindung anzusehen und umgekehrt.

Ein dritter Aspekt der Erfindung betrifft einen elektronisch lesbaren Datenträger. Der elektronisch lesbare Datenträger umfasst darauf gespeicherte elektronisch lesbare Steuerinformationen, die zumindest ein Computerprogramm wie soeben vorgestellt umfassen und derart ausgestaltet sind, dass sie bei der Verwendung des Datenträgers in einer elektronischen Recheneinrichtung ein hier vorgestelltes Verfahren gemäß dem ersten Aspekt der Erfindung ausführen können.

Dabei sind Vorteile und vorteilhafte Ausgestaltungen des dritten Aspekts der Erfindung als Vorteile und vorteilhafte Ausgestaltungen sowohl des zweiten als auch des ersten Aspekts der Erfindung anzusehen und jeweils umgekehrt.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Es zeigt:
- FIG 1: schematisches Ablaufdiagramm eines Verfahrens zum Betreiben eines Stromnetzes; und
- FIG 2: schematischen Ablauf eines Teils des Verfahrens gemäß FIG 1, bei welchem aus GIS-Daten ein Zweigmodellerzeugt wird.

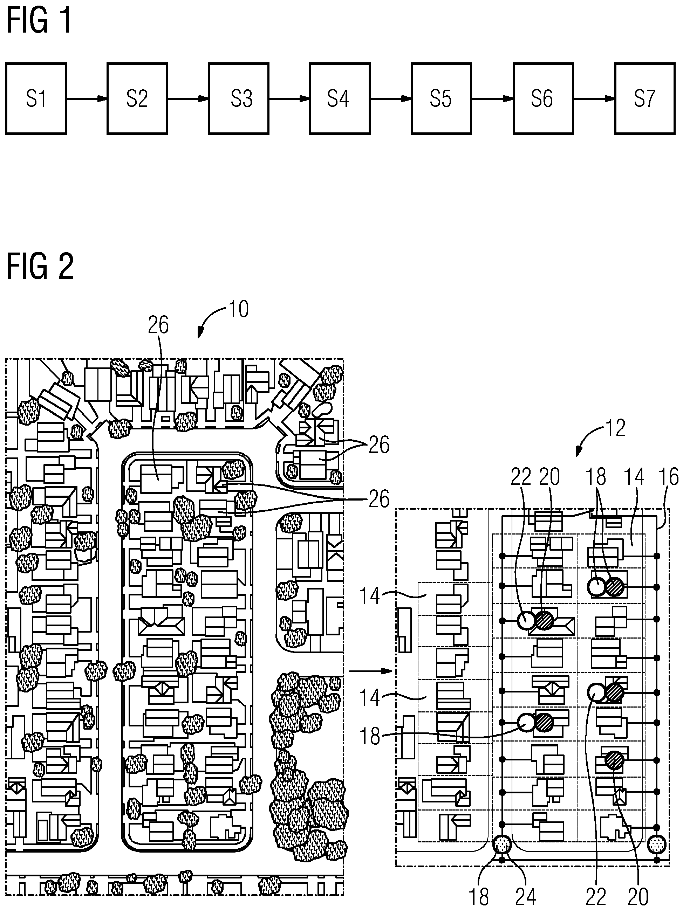

Die FIG 1 zeigt ein schematisches Ablaufdiagramm für ein Verfahren zum Betreiben eines Stromnetzes, welches Leitungen 16 und mehrere an diesen angeschlossene Anlagen 18 aufweist, wobei ein Zustand des Stromnetzes mit den in der FIG 1 gezeigten Schritten ermittelt wird:

In einem ersten Schritt S1 des Verfahrens erfolgt ein Bereitstellen von GIS-Daten 10, welche eine geografische Standortinformation des Stromnetzes umfassen, wobei die GIS-Daten 10 von einem Geoinformationssystems stammen beziehungsweise erstellt wurden oder werden.

In einem zweiten Schritt S2 erfolgt ein Erzeugen eines Zweigmodells 12 der Leitungen 16 anhand der GIS-Daten 10, wobei eine Anfangswahrscheinlichkeit für Verbindungen der Leitungen untereinander und/oder der Leitungen zu den mehreren Anlagen festgelegt wird.

In einem dritten Schritt S3 erfolgt ein Bereitstellen von Anlagendaten, welche zumindest eine der mehreren Anlange 18 beispielsweise dadurch charakterisieren, ob die Anlage 18 ein Verbraucher elektrischer Energie ist und/oder elektrische Energie bereitstellen kann.

In einem vierten Schritt S4 erfolgt ein Erzeugen eines Priormodells des Stromnetzes durch Kombination des Zweigmodells 12 mit den Anlagendaten, wobei eine Anfangswahrscheinlichkeit für die wenigstens eine Anlage 18 festgestellt wird, wobei die Anfangswahrscheinlichkeit insbesondere einen Zustand der wenigstens einen Anlage 18 beschreibt.

In einem fünften Schritt S5 erfolgt ein Generieren eines, insbesondere zufälligen, Eingabezustands, welcher einen möglichen Zustand des durch das Priormodell beschriebenen Stromnetzes beschreibt.

In einem sechsten Schritt S6 erfolgt ein Durchführen einer Lastflusssimulation, durch welche wenigstens eine Zustandsvariable anhand des Eingabezustands berechnet wird.

In einem siebten Schritt S7 erfolgt ein Bestimmen eines Zustandsmodells des Stromnetzes anhand der wenigstens einen Zustandsvariabel.

Vorteilhafterweise dient das Zustandsmodell dazu, einen Steuereingriff an wenigstens einer der mehreren Anlagen 18 durchzuführen. Bei wenigstens einer der mehreren Anlagen 18 kann es sich um eine Verbrauchereinrichtung und/oder eine Erzeugereinrichtung und/oder einen Abgang und/oder eine Ortsnetzstation und/oder eine Leistungsschaltung handeln.

Durch das vorgestellte Verfahren kann eine Netzzustandsschätzung als eine Schätzung des Zustands des Stromnetzes, welches ein Stromverteilung für Endverbraucher darstellt, insbesondere mittels Methoden des maschinellen Lernens, beispielsweise durch ein neuronales Netz und/oder einen bayesianischen Lernansatz bestimmt werden, wobei entsprechende Gewichte beziehungsweise eine Gewichtung für die Wahrscheinlichkeitsverteilung stochastisch statt deterministisch sein können.

Das Geoinformationssystem kurz GIS-System kann beispielsweise auf Satellitendaten und/oder Luftaufnahmen zurückgreifen und verfügt somit über Messungen. Durch das GIS-System kann beispielsweise über die Aufnahmen eine geografische Lage von Anfangs- und Endpunkten von den Leitungen 16, und/oder elektrische Daten, beispielsweise Widerstands- und Reaktanzbelag der Leitungen 16, umfassen. Ferner kann die geografische Lage und elektrische Eigenschaften der Transformatorstation, die beispielsweise eine der Anlagen 18 darstellen, erfasst werden. Zusätzlich können dem Geoinformationssystem eine geografische Lage und/oder charakteristische Daten, beispielsweise Jahresverbrauchsdaten, von angeschlossenen Endverbrauchern beziehungsweise Haushalten vorliegen. Auch die geografische Lage und charakteristische Daten, beispielsweise die installierte Leitung 16 und/oder die Ausrichtung von Photovoltaikanlagen, kurz PV-Anlagen, kann durch das Geoinformationssystem vorgehalten beziehungsweise von diesem abgerufen werden. Darüber hinaus können ebenso die geografische Lage und/oder charakteristische Daten von Ladestationen, wie beispielsweise eine maximale Ladeleistung, vorgehalten werden.

Die Anlagendaten können beispielsweise von einem Smart-Meter 20 und/oder einem Feldgerät 24, welches insbesondere Messungen durchführen kann, und/oder einem aktiven Element 22, vorteilhafterweise in Echtzeit, bereitgestellt werden.

So können beispielsweise bei den Endverbrauchern, also insbesondere in Häusern und/oder Wohnungen, welche Anlagen 18 aufweisen, Smart-Meter 20 installiert sein. Solch ein Smart-Meter 20 kann eine eindeutige Bezeichnung aufweisen, eine Smart-Meter-ID. Das Smart-Meter 20 dient dazu, Messungen von Spannungsbeträgen, insbesondere mit Viertelstundenauflösungen, die jeden Tag über ein Meter-Daten-Management, kurz MDM, für einen längeren Zeitintervall abgerufen werden können und die beispielsweise einem zentralen IT-System zur Verfügung stellen. Bei dem IT-System, welches beispielsweise beim Netzbetreiber einen Standort hat und/oder welches zum Durchführen des Verfahrens ausgebildet ist, kann es sich um wenigstens eine elektronische Recheneinrichtung handeln.

Ferner kann das Smart-Meter 20 Messungen von entnommenen Leistungen ebenfalls insbesondere in einer Viertelstundenauflösung, die jeden Tag über den MDM für ein längeres Zeitintervall abgerufen werden können, dem zentralen IT-System zur Verfügung gestellt werden.

Feldgeräte 24 können an verschiedenen Orten im Stromnetz installiert sein. Typisch sind Leistungsschalter aus Abgängen von Mittelspannungstransformationen und/oder Ortsnetzstationen, insbesondere Trafos, welche Mittelspannung auf Niederspannung regeln. Je nach Art des beim Feldgerät 24 vorgehaltenen Messgeräts können verschiedene Messgrößen erfasst werden. Dabei kann das Feldgerät 24 eine eindeutige Kennung beziehungsweise ID haben und zur Messung von elektrischen Größen ausgebildet sein.

Beispielsweise kann eine in das Stromnetz injizierten Leistung gemessen werden, was beispielsweise mit einer Auflösung von einer Minute durchgeführt werden kann. Zusätzlich oder alternativ ist eine Messung der injizierten Blindleistung ebenfalls mit einer Auflösung von einer Minute möglich. Zusätzlich oder alternativ kann eine Messung an jedem Abgang fließender Ströme ebenfalls in Minutenauflösung und/oder eine Messung der Spannung ebenfalls mit einer Auflösung von einer Minute durchgeführt werden. Die Daten, die diese Messung liefern, können für den Eingabezustand und/oder zum Erzeugen des Priormodells und/oder als Zustandsvariabel verwendet werden.

Bei dem aktiven Element handelt es sich insbesondere um eine flexible Anlage in einem der Haushalte beziehungsweise bei einem Endverbraucher, wobei die flexible Anlage eine eindeutige Identifikationsnummer beziehungsweise ID aufweisen kann. Bei der flexiblen Anlage kann es sich um eine Ladestation und/oder eine Photovoltaikanlage, kurz PV-Anlage, handeln, die gesteuert werden kann, insbesondere durch den beschriebenen Steuereingriff. Bei einer Installation der flexiblen Anlage kann beispielsweise ein QR-Code fotografiert und in einer Smartphoneapplikation abgelegt werden, wobei somit Informationen über die flexible Anlage und ihre Koordinaten gespeichert werden und der elektronischen Recheneinrichtung zur Verfügung gestellt werden können.

Dabei können für das aktive Element beziehungsweise die flexible Anlage beispielsweise Messungen und/oder Steuerungsfreiheitsgrade zur Verfügung stehen, welche einen Leistungssollwert, insbesondere in minutengenauer Auflösung erfassen können, und/oder Geokoordinaten umfassen.

Zur Bestimmung des Zustands des Stromnetzes und seiner Wahrscheinlichkeitsverteilung wird vorteilhafterweise ein bayesianisches neuronales Netzwerk verwendet. Mit anderen Worten wird das Zustandsmodell durch maschinelles Lernen, insbesondere mittels des bayesianischen neuronalen Netzes bestimmt, wobei die wenigstens eine durch die Lastflusssimulation gewonnene Zustandsvariabel als Trainingsdaten verwendet werden kann.

Nun kann beispielsweise zur Bestimmung des Priormodells eine Parametrierung einer Priorverteilung erfolgen, wobei die Priorverteilung einfache Grundannahme umfassen kann.

Durch die GIS-Daten 10 kann, wie in FIG 2 skizziert, das Zweigmodell 12 erstellt werden. Diese Zweigmodell 12 zeigt den Verlauf der Leitungen 16 des Stromnetzes und dabei insbesondere den Verlauf zwischen den Leitungen 16 und den Anlagen 18. Dabei erinnert das Zweigmodell 12 an ein Skelett beziehungsweise Gerippe des Stromnetzes, wie in FIG 2 gezeigt ist. Beim Erstellen dieses Modells werden die Leitungen 16 und deren Verbindungen von Endpunkten und/oder geografisch naheliegenden Anfangspunkten und somit Topologiezustände erfasst. Dabei können bestimmende Wahrscheinlichkeiten insbesondere für die Verbindungen modelliert werden. Diese Wahrscheinlichkeiten beziehungsweise Anfangswahrscheinlichkeiten können ohne zusätzliches Vorwissen beispielsweise gleich verteilt gewählt werden.

Um nun das Priormodell, welches im Schritt S4 erzeugt wird, vorteilhaft bilden zu können, wird für die angeschlossenen Anlagen 18 aus zugehörigen charakteristischen Daten, den Anlagendaten, eine Wahrscheinlichkeitsverteilung, die Anfangswahrscheinlichkeit, erstellt. Diese Wahrscheinlichkeitsverteilung kann beispielsweise mögliche Last und/oder Einspeisezustände mit gewissen Unsicherheiten beschreiben. Bei dem Vorliegen von Messdaten können die Wahrscheinlichkeitsverteilungen aus diesen gewonnen werden. Bei der Lastflusssimulation werden insbesondere Zustandsgrößen simuliert. Dabei können entsprechend den prioren und/oder parametrierten Wahrscheinlichkeitsverteilungen Strichproben - so genannte Samples - gezogen werden. Das heißt ein Satz von Topologiezuständen, Lasten und/oder Einspeisungen wird vorgegeben. Diese können insbesondere zufällig generiert werden und bilden beispielsweise und insbesondere einen Eingabezustand des Stromnetzes. Bei der Lastflusssimulation wird nun mit diesem insbesondere zufällig generierten Eingabezustand die Simulation durchgeführt, sodass eine Zustandsvariable, welche einen Zustand, wie beispielsweise Spannung, Strom und/oder Leitungsfluss, charakterisiert, berechnet wird. Vorteilhaft für das Verfahren ist, dass bei der Lastflusssimulation aus einer Eingangsgröße eine Zielgröße ermittelt wird, welche zusammen als Trainingspaar für das Zustandsmodell verwendet werden. Mit anderen Worten wird die Eingangsgröße, ein so genannter Input beziehungsweise der Eingabezustand, als auch die Zielgröße, beziehungsweise ein Target beziehungsweise eine Ausgabe des Modells, zusammengefasst. Das daraus gebildete Trainingspaar kann für ein Training beziehungsweise eine Trainingsphase des Zustandsmodells, welches insbesondere aus dem bayesianischen neuronalen Netz gebildet wird, bereitgestellt werden.

Der Eingabezustand und/oder die Zustandsvariabel und/oder der Zustand können insbesondere eine Spannung und/oder einen Strom und/oder ein Spannungsband und/oder eine Leistung umfassen.

Somit ergibt sich als Input für Daten - den Eingabezustand - der Lastflusssimulation, welche für das Training der Inputpaare als die Trainingsdaten beziehungsweise als Trainingspaar verwendet eine Größe, die insbesondere in Echtzeit als Messung zur Verfügung steht. Als Target eine insbesondere relevante Zustandsgröße, wie beispielsweise ein Spannungsbetrag und/oder Strom, welcher aus den simulierten Datenwerten zusammengefasst wird, verwendet beziehungsweise ausgegeben.

Durch das Training beziehungsweise die Trainingsphase kann eine Verfeinerung des Zustandsmodells insbesondere nach Wiederholung der Lastflusssimulation erfolgen, wobei die Simulation derart oft wiederholt werden kann, bis ein Gütekriterium als Abbruchbedingung erfüllt wird. Mit anderen Worten wird in der Trainingsphase das bayesianische neuronale Netz initialisiert und mit Trainingsdatensätzen trainiert und das Training mit neu gebildeten Trainingsdaten wiederholt. Wenn ein Gütekriterium für einen der Trainingsdatensätzen erfüllt ist, kann das erste Training als abgeschlossen betrachtet werden. Andernfalls können insbesondere durch die Schritte S4 und S5 des Verfahrens weitere Trainingsdaten erzeugt werden, durch welche für das Zustandsmodell eine bessere Genauigkeit für Vorhersagen des Zustands erreicht werden kann. Nach dem Training kann das Zustandsmodell im Betrieb Messungen als Inputs verwenden und der Output des BNN kann mehrfach instanziiert werden. Daraus können Erwartungswerte und/oder Unsicherheiten bestimmt werden.

Ein Vorteil des Zustandsmodells ist, dass diesem Daten in Echtzeit beziehungsweise Echtzeitdaten zugeführt werden können. Dabei können insbesondere die Anlagendaten zumindest teilweise und insbesondere bei einer wiederholten Durchführung des Verfahrens als Echtzeitdaten ausgebildet sein. So kann im laufenden Betrieb des Stromnetzes, wenn quasi in Echtzeit ständig neue Eingabezustände beziehungsweise Eingangsgrößen und somit Inputs insbesondere durch Messungen generiert werden, derart betrieben werden, dass beispielsweise vorteilhafterweise Erwartungswerte und Unsicherheiten anhand der Messungen gebildet werden.

Ferner kann das Zustandsmodell nachtrainiert werden, wobei Messungen jeweils als Eingabezustand und/oder Zustandsvariabel verwendet werden. Mit anderen Worten sind beispielsweise aus dem MDM rückblickend Daten für eine geschätzte Zustandsgröße erhältlich, diese werden als zusätzliche Targets und zugehörigen Messungen zum gleichen Zeitintervall als Inputs in neue Trainingspaare zusammengefasst. Mit diesen Trainingspaaren kann das BNN nachtrainiert werden.

Vorteilhaft wird bei dem Verfahren beziehungsweise bei dem Betreiben des Stromnetzes ein Zusammenhang zwischen Steuereingriff und Änderung des Zustands erfasst. Mit anderen Worten erfolgt eine Exploration des Systems zum Erkenntnisgewinn. Beispielsweise kann eine Bestimmung verschiedener optimaler Steuereingriffe an den Anlagen 18, insbesondere mit aktiven Identifikationssignalen, erfolgen, welche beispielsweise keine Randbedingungen des Zustandsmodells verletzen. Ferner kann eine Aufzeichnung von Messungen der Tagezustandsgrößen und zugehörigere Inputmessgrößen erfolgen. Ferner kann ein Zusammenhang zwischen Steuereingriff und Zustandsänderung modelliert werden, wobei beispielsweise ein bayesianisches Modell anstelle des bayesianischen neuronalen Netzes statistische Parameter des Zusammenhangs durch die Steuerungseingriffe identifizieren kann.

FIG 2 zeigt systematisch die Stellung des Zweigmodells, wobei GIS-Daten 10 in Form einer Luftaufnahme vorliegen, in welcher insbesondere mehrere Häuser 26 zu sehen sind und welche beispielsweise mittels maschinellen Sehens analysiert wird. Dabei kann das maschinelle Sehen beim Erzeugen des Zweigmodells 12 verwendet werden. Dabei werden einzelne Bereiche der Luftaufnahme in Segmente 14 unterteilt. In einem jeweiligen Segment 14 kann nun eine Leitung 16 und/oder eine Anlage 18 ausgemacht werden. Dabei kann es sich bei den Anlagen beispielsweise um ein Smart-Meter 20 oder ein aktives Element 22 oder ein Feldgerät 24 handeln.

Durch das vorgestellte Verfahren ergibt sich der Vorteil, dass eine Berücksichtigung einer Unsicherheit und/oder einer Unbestimmtheit über eine Wahrscheinlichkeitsverteilung der Gewichte des bayesianischen neuronalen Netzes erfolgen kann.

Durch das Verfahren kann auf vorteilhafte Weise eine sicherheitskritische Anwendung wie das Stromnetz vorteilhaft betrieben werden.

### Bezugszeichenliste

- 10: GIS-Daten
- 12: Zweigmodell
- 14: Segment
- 16: Leitung
- 18: Anlage
- 20: Smart-Meter
- 22: aktives Element
- 24: Feldgerät
- 26: Haus
- S1: erster Schritt
- S2: zweiter Schritt
- S3: dritter Schritt
- S4: vierter Schritt
- S5: fünfter Schritt
- S6: sechster Schritt
- S7: siebter Schritt

## Patentansprüche

1. Verfahren zum Betreiben eines Stromnetzes für Niederspannung und/oder Mittelspannung, welches Leitungen (16) und mehrere an diese angeschlossenen Anlagen (18) aufweist, wobei ein Zustand des Stromnetzes mit den folgenden Schritten ermittelt wird:
- Bereitstellen von GIS-Daten (10), welche eine geografische Standortinformation des Stromnetzes umfassen, eines Geoinformationssystems; (S1)
- Erzeugen eines Zweigmodells (12) der Leitungen anhand der GIS-Daten, wobei eine Anfangswahrscheinlichkeit für Verbindungen festgelegt wird; (S2)
- Bereitstellen von Anlagendaten, welche zumindest eine der mehreren Anlagen (18) charakterisieren; (S3)
- Erzeugen eines Priormodells des Stromnetzes durch Kombination des Zweigmodells (12) mit den Anlagendaten, wobei eine Anfangswahrscheinlichkeit für die wenigstens eine Anlage (18) festgelegt wird; (S4)
- Generieren eines Eingabezustands, welcher einen möglichen Zustand des durch das Priormodell beschriebenen Stromnetzes beschreibt; (S5)
- Durchführen einer Lastflusssimulation, durch welche wenigstens eine Zustandsvariabel anhand des Eingabezustands berechnet wird; (S6) und
- Bestimmen eines Zustandsmodells des Stromnetzes anhand der wenigstens eine Zustandsvariabel. (S7)

2. Verfahren nach Anspruch 1, **dadurch gekennzeichnet, dass** anhand des Zustandsmodells ein Steuereingriff an einer der mehreren Anlagen (18) durchgeführt wird.

3. Verfahren nach Anspruch 1 oder 2, **dadurch gekennzeichnet, dass** das Zustandsmodells durch maschinelles Lernen erzeugt wird, wobei die wenigstens eine durch die Lastflusssimulation gewonnene Zustandsvariabel als Trainingsdaten verwendet werden und insbesondere ein bayesianisches neuronales Netz verwendet wird

4. Verfahren nach Anspruch 3, **dadurch gekennzeichnet, dass** eine Verfeinerung des Zustandsmodells durch Wiederholung des Lastflusssimulationen erfolgt, bis ein festgelegtes Gütekriterium als Abbruchbedingung erfüllt wird.

5. Verfahren nach einem der vorhergehenden Ansprüche, **dadurch gekennzeichnet, dass** die Anlagendaten von einem Smart-Meter und/oder einem Feldgeräte und/oder einem aktiven Element bereitgestellt werden.

6. Verfahren nach einem der vorhergehenden Ansprüche, **dadurch gekennzeichnet, dass** dem Zustandsmodell Echtzeitdaten zugeführt werden und/oder die Anlagendaten Echtzeitdaten und/oder echtzeitnahe Daten umfassen.

7. Verfahren nach einem der vorhergehenden Ansprüche, **dadurch gekennzeichnet, dass**
das Zustandsmodell nachtrainiert wird, wobei Messungen als Eingabezustand und/oder Zustandsvariabel verwendet werden.

8. Verfahren nach einem der Ansprüche 2 bis 7, **dadurch gekennzeichnet, dass** ein Zusammenhang zwischen Steuereingriff und Änderungen des Zustands erfasst wird.

9. Verfahren nach einem der vorhergehenden Ansprüche, **dadurch gekennzeichnet, dass** bei der Lastsimulation aus einer Eingangsgröße eine Zielgröße ermittelt wird, welche zusammen als Trainingspaar für das Zustandsmodell verwendet werden.

10. Verfahren nach einem der vorhergehenden Ansprüche, **dadurch gekennzeichnet, dass** der Eingabezustand und/oder die Zustandsvariable und/oder der Zustand eine Spannung und/oder einen Strom und/oder Spannungsband und/oder eine Leistung umfassen.

11. Verfahren nach einem der vorhergehenden Ansprüche,
**dadurch gekennzeichnet, dass** eine der mehreren Anlagen als Verbraucheinrichtung und/oder Erzeugereinrichtung und/oder Abgang und/oder Ortsnetzstation und/oder Leistungsschalter ausgebildet ist.

12. Verfahren nach einem der vorhergehenden Ansprüche, **dadurch gekennzeichnet, dass** eine Erstellung einer Stichprobe erfolgt und/oder eine modellierte, a posteriori Wahrscheinlichkeitsverteilung des Zustandes erzeugt wird.

13. Computerprogramm, welches direkt in einen Speicher einer elektronischen Recheneinrichtung ladbar ist, mit Programmmitteln, um die Schritte des Verfahrens nach einem der Ansprüche 1 bis 12 auszuführen, wenn das Programm in der elektronischen Recheneinrichtung ausgeführt wird.

14. Elektronisch lesbarer Datenträger mit darauf gespeicherten elektronisch lesbaren Steuerinformationen, welche zumindest ein Computerprogramm nach Anspruch 13 umfassen und derart ausgestaltet sind, dass sie bei Verwendung des Datenträgers in einer elektronischen Recheneinrichtung ein Verfahren nach einem der Ansprüche 1 bis 12 durchführen.
